# EUROPÄISCHE PATENTANMELDUNG

(11) **EP 0 705 872 A2**
(43) Veröffentlichungstag der Anmeldung: **10.04.1996**
(21) Anmeldenummer: 95114878.2
(22) Anmeldetag: 21.09.1995
(51) Int. Cl.: C08K 5/15

(54) **Verwendung von alpha- und/oder beta-Tocopherol (Vitamin E) zur Stabilisierung von Polyetherpolyolen**

(30) Priorität: 04.10.1994 DE 4435474
(71) Anmelder: BAYER AG, D-51368 Leverkusen (DE)
(72) Erfinder: Gupta, Pramod, Dr., D-50181 Bedburg (DE); Rabe, Hansjürgen, Dr., D-51381 Leverkusen (DE)

(57) **Zusammenfassung**

α- und/oder ß-Tocopherol (Vitamin E) eignet sich ausgezeichnet als Stabilisator für Polyetherpolyole mit Molgewichten von 300 bis 10 000 gegebenenfalls in Kombination mit octylierten Diphenylaminen.

## Beschreibung

Die vorliegende Erfindung betrifft die Verwendung von α- und/oder β-Tocopherol (Vitamin E) als Stabilisator für Polyetherpolyole und für daraus hergestellte Polyurethane.

Stabilisatoren bzw. Antioxidantien für Polyetherpolyole und Polyurethane sind wohlbekannt und umfassen sterisch gehinderte Phenole, Bisphenole, Dialkyldiphenylamine, Phenothiazine, Phosphite bzw. Gemische von Vertretern aus diesen Substanzklassen (vgl. z.B. US 4 070 304, US 4 444 676, DE 2 557 619, EP 38 876).

Die Wirksamkeit der Antioxidantien ist einerseits durch die Substanzklasse (Diphenylamine, Phenothiazine, sterisch gehinderte Phenole), andererseits durch die Substratverträglichkeit bestimmt. Am häufigsten findet 2,6-Di-tert.butyl-4-methylphenol (BHT) allein oder in Kombination mit heiteren Verbindungen der angeführten Stabilisatorklassen Verwendung zur Stabilisierung von Polyetherpolyolen. Auch die Verwendung von 3,5-Di-tert.butyl-4-hydroxyphenyl-propionsäure ist bekannt (BHP) (s. DE 3 3842 945).

Nachteil von BHT ist die relativ hohe Flüchtigkeit und Migrationstendenz in Polyurethane umhüllende Substrate sowie die daraus resultierende starke Gelbfärbung der Substrate in NOₓ-belasteter Atmosphäre. Stabilisatoren ohne diese Nachteile sind daher von Interesse, und es war Aufgabe der vorliegenden Erfindung, solche Materialien bereitzustellen.

Bekannt sind auch Gemische aus mindestens einem sterisch gehinderten Amin mit UV-Absorbern und Antioxydantien aus den Klassen der sterisch gehinderten Phenole, Phosphite und des Vitamins E und seiner Derivate (EP 0 312 927 und DE 3 725 926). Ebenfalls beschrieben werden Stabilisatoren für polymere Verbindungen, bestehend aus Gemischen von Mono- oder Diphosphit oder - Phosphoniten, α-Tocopherol (oder seinen Derivaten) und einem Lichtstabilisator aus der Gruppe der polymeren, ein sterisch gehindertes Amin enthaltenden Polysiloxane (DE 4 233 973).

Überraschenderweise wurde gefunden, daß α- und/oder β-Tocopherol alleine ausgezeichnet als stabilisierendes Antioxydans bei der Herstellung von Polyetherpolyolen mit Molekulargewichten von 300 bis 10 000, bevorzugt 500 bis 7 000, geeignet ist. Je nach Grundaufbau des Polyetherpolyols sind 0.01 bis 1.0, bevorzugt 0,4 bis 0,8, Gew.% wirksam. Eine synergistische Wirkung zeigt sich bei Mitverwendung von OCD (Octyliertes Diphenylamin). In diesem Falle können 0.01 bis 0.5, bevorzugt 0.02 bis 0.2, Gew.% α- und/oder ß-Tocopherol und 0.01 bis 0.5, bevorzugt 0.02 bis 0,2, Gew.% OCD, bezogen auf das Polyetherpolyol zum Einsatz gelangen.

α- und/oder ß-Tocopherol, die in fester und flüssiger Form im Handel erhältlich sind, eignen sich bei allen gebräuchlichen Polyetherpolyolen, wie z.B. mono-, di-, tri-, tetra- und hexafunktionellen Polyetherpolyolen sowie Polyetherpolyolen gebrochener Funktionalität, die durch Umsetzung von Epoxiden, wie Ethylen- und Propylenoxid, mit Kombinationen von Starteralkoholen, wie Glycerin oder Trimethylolpropan, hergestellt werden. Diese Polyetherpolyole können aus herkömmlichen Epoxiden in reiner Form oder in beliebigen Kombinationen hergestellt sein (s. z.B. G- Oertel, Kunststoff-Handbuch, Band F, Polyurethane, Carl Hanser Verlag, München, 1993, S. 58 ff.). Die so hergestellten bzw. stabilisierten Polyetherpolyolen und nach üblichen Rezepturen gefertigte Polyurethane bzw. Polyurethanschaumstoffe zeigen ein verbessertes Verhalten gegen Kernfärbung und bleiben indifferent hinsichtlich Gelbfärbung von Umhüllungen (Textil, Leder) unter Einwirkung von NOₓ-Gasen (Industrie- bzw. verkehrsreiche Gegenden). Derartige Verfärbungen treten bei üblicherweise mit BHT stabilisierten Polyetherpolyole und daraus hergestellten PU-Schaumstoffen häufig auf. Sie werden hervorgerufen durch die Migrationstendenz des BHT, das in den Umhüllungen (Textil, Leder) bei Feuchteeinwirkung mit NOₓ zu stark gelben Farbstoffen reagiert.

Der Gegenstand der vorliegenden Erfindung soll anhand der folgenden Beispiele noch näher erläutert werden (%-Angaben bedeuten jeweils Gew.-%-Angaben).

### Beispiele

### Beispiel 1

Ein langkettiger EO (Ethylenoxid) und PO (Propylenoxid) enthaltender Polyether der OH-Zahl 46, Molgewicht ca. 4 000 mit sekundären Hydroxylgruppen wurde hergestellt mit:
a) 0,3 % α-Tocopherol (Vitamin E)
b) 0,1 % α-Tocopherol und 0,1 % octyliertes Diphenylamin (Vulkanox OCD® der Fa. Bayer AG)
c) 0,1 % octyliertes Diphenylamin (Vulkanox OCD®)
Alle Polyetherpolyole wurden mit einer für Weichschaum nach dem Stand der Technik üblichen Rezeptur verschäumt und zeigten in einem speziellen Heißlufttest um die Einblasstelle eine Verfärbung von:
a) 6 cm² gelb
b) 2 cm² gelb
c) 60 cm² gelb, 18 cm² braun
Die Vorgabetemperatur der Heißluft betrug 202°C, die Temperatur im Schaum bei a) und b) 202°C, bei c) 206°C.

Ein "Gelbtest" mit Frottierstoff umhüllten Schaummustern ergab bei a) und b) keine Gelbfärbung des Stoffes, bei c) eine leichte Rosafärbung des Schaums im Bereich der Umluftströmung.

### Beispiel 2

Ein langkettiger EO und PO enthaltender Polyether der OH-Zahl 35, Molgewicht ca. 5 000, mit primären Hydroxylgruppen wurde hergestellt mit:
a) 0,05 % α-Tocopherol und 0,05 % octyliertem Diphenylamin
b) 0,2 % 3,5-Di-tert.-butyl-4-methylphenol (Vulkanox KB®) und 0,1 % octyliertem Diphenylamin (Vulkanox OCD®).

Die Polyether wurden mit einer für Weichschaum nach dem Stand der Technik entsprechenden Rezeptur verschäumt und zeigten in einem speziellen Heißlufttest um die Einblasstelle folgende Verfärbungen:
a) Spur gelb
b) 55 cm² gelb, 12 cm² braun
Hier zeigt sich auch eine deutliche Überlegenheit der Kombination α-Tocopherol/octyliertes Diphenylamin gegenüber einer konventionellen BHT-Kombination. Ein "Gelbtest" mit Frottierstoff umhüllten Schaummustern ergab bei:
a) keine Verfärbung des Stoffes
b) charakteristische Gelbfärbung im Bereich der Umluftströmung.

## Patentansprüche

1. Verwendung von α- und/oder β-Tocopherol (Vitamin E) als Stabilisator für Polyetherpolyole mit Molgewicht von 300 bis 10 000 gegebenenfalls in Kombination mit octyliertem Diphenylamin.

2. Verwendung von α- und/oder β-Tocopherol gemäß Anspruch 1 in Mengen von 0,01 bis 1,0 Gew.-%, bezogen auf die Menge an zu stabilisierendes Polyetherpolyol.
